# EUROPEAN PATENT SPECIFICATION

(11) **EP 3 785 948 B1**
(45) Date of publication and mention of the grant of the patent: **08.11.2023**
(21) Application number: 19792152.1
(22) Date of filing: 15.04.2019
(51) Int. Cl.: B60C 19/08, B60C 19/00

(54) **TIRE**
REIFEN
PNEUMATIQUE

(30) Priority: 23.04.2018 JP 2018082310
(43) Date of publication of application: 03.03.2021
(73) Proprietor: Bridgestone Corporation, Chuo-Ku Tokyo 104-8340 (JP)
(72) Inventor: KONDO Yoichiro, Tokyo 104-8340 (JP); ISHIZAWA Yohei, Tokyo 104-8340 (JP)
(74) Representative: Marks & Clerk LLP
(86) International application number: PCT/JP2019/016138
(87) International publication number: WO 2019/208302

(56) References cited:
- EP-A1- 2 933 122
- DE-A1-102010 017 443
- JP-A- 2004 268 863
- JP-A- 2009 154 608
- JP-A- 2011 525 453
- JP-A- 2012 143 993
- JP-A- 2014 125 005
- JP-A- 2014 133 467
- JP-A- 2014 180 868
- JP-A- 2015 123 900
- US-A1- 2013 174 951

## Description

### [Technical Field]

The present invention relates to a tire capable of enhancing the conductivity of a whole tire.

### [Background Art]

In recent years, a pneumatic tire (hereinafter, referred to as a tire) having a low rolling resistance (RR) becomes popular from a viewpoint of an environment protection. In such a low RR tire, rubber that suppresses a content of the carbon black is generally adopted. The carbon black is a conductive material, and therefore the conductivity of the tire is deteriorated.

Thus, a structure in which a conductive cord is woven into a carcass that forms a frame of the tire has been known (see Patent Literature 1). With this, the static electricity charged on a vehicle through the tire can be effectively discharged. Reference is also drawn towards Patent Literature 2 to 5 listed below.

### [Citation List]

### [Patent Literature]

[PTL 1] Japanese Unexamined Patent Application Publication No. 2015-171848
[PTL 2] EP 2 933 122 A1
[PTL 3] DE 10 2010 017443 A1
[PTL 4] JP 2009 154608 A
[PTL 5] US 2013/174951 A1

### [Summary of Invention]

However, in the tire disclosed in the Patent Literature 1, the conductive cord that is woven into the carcass coated with rubber is not exposed to an outer surface of the carcass. Thus, there is room for improvement in forming a high conductive pass (circuit) between the vehicle and the ground.

Accordingly, an object of the present invention is, in consideration of the problem described above, to provide a tire capable of further enhancing the conductivity of a whole tire even though low conductive rubber is adopted therein.

One aspect of the present invention is a tire as claimed in claim 1.

Another aspect of the present invention is a tire as claimed in claim 2.

### [Brief Description of Drawings]

[Fig. 1] Fig. 1 is a perspective view of a pneumatic tire 10 partially exploded.
[Fig. 2] Fig. 2 is a cross-sectional view of a part the pneumatic tire 10 along a tire width direction and a tire radial direction.
[Fig. 3] Fig. 3 is a left side view of a vehicle 100 to which the pneumatic tire 10 is mounted.
[Fig. 4] Fig. 4 is a schematic diagram of a conductive pass between the vehicle and the ground.
[Fig. 5] Fig. 5 is an enlarged cross-sectional view of a part of the pneumatic tire 10 including a bead 60.
[Fig. 6] Fig. 6 is a cross-sectional view of a surface cord 80 along a radial direction thereof.
[Fig. 7] Fig. 7 is a cross-sectional view of a surface cord 80M along the radial direction thereof according to a modified example.

### [Description of Embodiments]

Hereinafter, embodiments of the present invention will be described with reference to the drawings. The same reference signs or similar reference signs are assigned to the same functions or the same components and the description thereof is omitted as needed.

### (1) Schematic whole configuration of tire

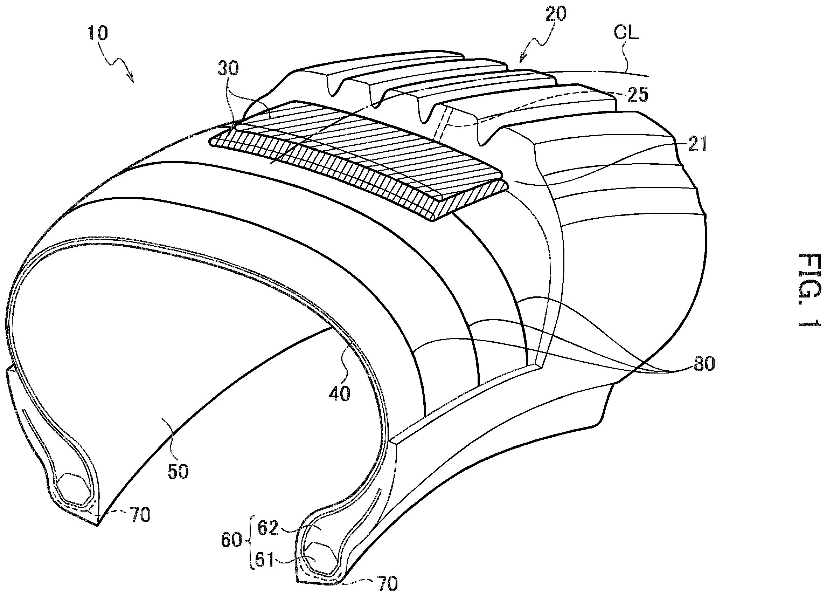

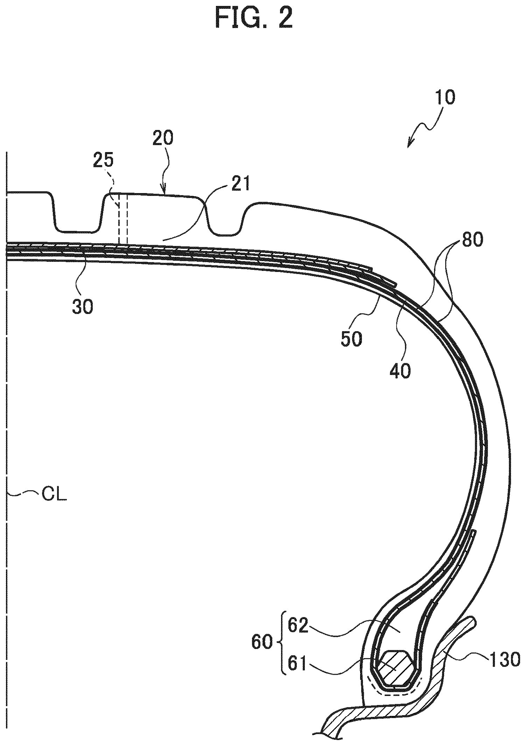

Fig. 1 is a perspective view of a pneumatic tire 10 partially exploded. Fig. 2 is a cross-sectional view of a part the pneumatic tire 10 along a tire width direction and a tire radial direction. In Fig. 2, a half of the pneumatic tire 10 with respect to a tire equatorial line CL is illustrated, however the pneumatic tire 10 is linear symmetry to the tire equatorial line CL.

As shown in Fig. 1 and Fig. 2, the pneumatic tire 10 is provided with a tread 20 that contacts a road surface (ground).

A block and a groove (including a sipe) are appropriately formed on the tread 20 in accordance with the performance required to the pneumatic tire 10. A belt layer 30 and a carcass 40 are disposed at an inner side in a tire radial direction of the tread 20. The tread 20 includes a tread under cushion rubber 21 (TUC) disposed at the inner side in the tire radial direction thereof.

The belt layer 30 is formed by a pair of crossing belts. The belt layer 30 has a structure in which an organic fiber cord (or a metal cord) is coated with rubber. The belt layer 30 may include an additional belt such as a cap layer.

The carcass 40 forms a frame of the pneumatic tire 10. The carcass 40 is folded from an inner side in a tire width direction to an outer side in the tire width direction at a position of a bead 60. The carcass 40 has a structure in which an organic fiber cord is coated with rubber.

An inner liner 50, which is a sheet-like rubber member that prevents the leak of gas (air) filled in the pneumatic tire 10 assembled to a rim wheel 130 (see Fig. 2), is disposed at an inner side in the tire radial direction of the carcass 40.

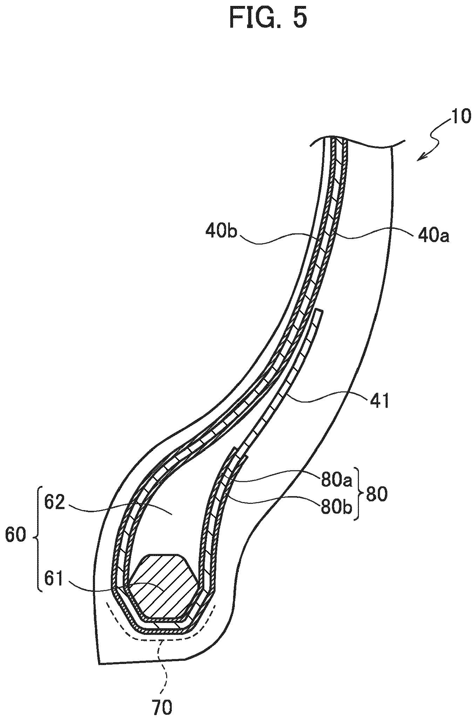

The bead 60 is a pair of ring-like members disposed along a tire circumferential direction and is locked to the rim wheel 130. The bead 60 includes a bead core 61, and a stiffener 62 that fills a gap between the folded carcasses 40 (folded parts 41, see Fig. 5). The stiffener 62 may be also called a bead filler.

A chafer 70 that prevents the damage of the carcass 40 or the like due to the friction with the rim wheel 130 is disposed at the inner side in the tire radial direction of the bead core 61, namely at a position close to the rim wheel 130.

The pneumatic tire 10 is preferably used for mainly a passenger vehicle (including minivan and SUV), however the pneumatic tire 10 may be used for a truck and a bus other than a passenger vehicle. In the present embodiment, the pneumatic tire 10 suppresses the rolling resistance (RR) and therefore fulfills a certain standard (for example, labeling system and grading of Japan Automobile Tyre Manufacturers Association).

In the present embodiment, the tread 20, the belt layer 30 and the carcass 40 are formed of rubber having the carbon black (conductive material) content of a predetermined value or less in order to achieve the low rolling resistance. Not all of the tread 20, the belt layer 30 and the carcass 40 may be formed of the rubber, and therefore some of them may be formed of the rubber. The rubber having the carbon black content of the predetermined value or less denotes the composition of the carbon black that can fulfill the standard described above. The predetermined value for each member may be different in accordance with the relationship with the rubber property of other member.

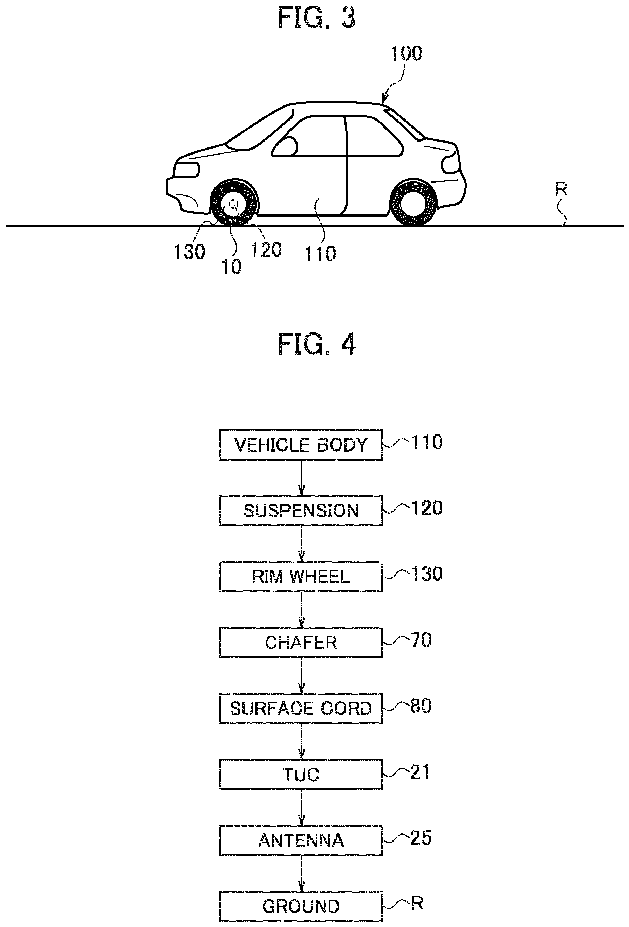

The pneumatic tire 10 forms a high conductive pass (circuit) in order to discharge the static electricity charged on a vehicle 100 (not shown in Fig. 1 and Fig. 2, see Fig. 3). Hereinafter, such a pass is called a conductive pass.

Specifically, the tread 20 has an antenna 25 disposed along the tire radial direction from the tread under cushion rubber 21 to a surface of the tread 20.

The antenna 25 is formed of high conductive rubber. It is preferable that the electric resistance (specific volume resistivity) of the rubber used in the antenna 25 is, for example, 1.0 × 10⁷ Ω·cm or less.

A surface cord 80 is disposed on each of a surface of the carcass 40 at a tire outer side and a surface of the carcass 40 at a tire inner side.

The surface cord 80 has conductivity. Specifically, the electric resistance (surface resistivity) of the surface of the surface cord 80 is 50 Ω/sq. or less.

The surface cord 80 also has a function that prevents generation of an air reservoir when the pneumatic tire 10 is manufactured (vulcanized). Such a cord may be also called a bleeder yarn. The cord has air permeability.

In the present embodiment, the surface cord 80 is formed by an organic fiber cord to which a conductive coating is applied. That is, the surface cord 80 is formed by adding conductivity to a bleeder yarn that prevents the generation of the air reservoir.

The surface cords 80 are arranged with a predetermined interval in the tire circumferential direction. The interval is not especially limited, however it is preferable that the interval is set such that a plurality of the surface cords 80 is positioned in a ground contact surface of the tread 20, from a viewpoint of surely generating the conductive pass.

In the present embodiment, the surface cord 80 is disposed from one bead 60 to the other bead 60 via the tread 20.

### (2) Conductive pass between the vehicle and the ground

Next, a configuration of the conductive pass between the vehicle to which the pneumatic tire 10 is mounted and the ground will be described.

Fig. 3 is a left side view of the vehicle 100 to which the pneumatic tire 10 is mounted. Fig. 4 is a schematic diagram of the conductive pass between the vehicle and the ground.

As shown in Fig. 3, the vehicle 100 is provided with a vehicle body 110, a suspension 120 (underbody), and the pneumatic tire 10 assembled to the rim wheel 130, as components relating to the conductive pass. The pneumatic tire 10, specifically the tread 20 (see Fig. 1 and Fig. 2) of the pneumatic tire 10, contacts the ground R. The vehicle 100 is grounded by the conductive pass passing through such components, so that the static electricity charged on the vehicle 100 is discharged to the ground R.

As shown in Fig. 4, the conductive pass passes through the vehicle body 110, the suspension 120, the rim wheel 130, the chafer 70 (see Fig. 1 and Fig. 2, hereinafter the same), the surface cord 80, the tread under cushion rubber 21 (TUC), the antenna 25 and the ground R.

The components that form the pneumatic tire 10 are not necessarily short-circuited to each other, however the electric resistance between the inner surface in the tire radial direction of the bead 60 that contacts the rim wheel 130 and the outer surface in the tire radial direction of the antenna 25 should be set to an extent or less in which the static electricity is sufficiently discharged.

The carcass 40 may supplementally form the conductive pass, in addition to the surface cord 80. Similarly, the tread 20 other than the antenna 25 may supplementally form the conductive pass.

### (3) Specific structure of the surface cord 80

Fig. 5 is an enlarged cross-sectional view of a part of the pneumatic tire 10 including the bead 60. As shown in Fig. 5, the surface cord 80 includes an outer cord 80a and an inner cord 80b. Fig. 5 schematically shows the arrangement of the surface cord 80 (and the chafer 70).

The outer cord 80a is disposed on an outer surface 40a (first surface), which is a surface of the carcass 40 at the tire outer side. The inner cord 80b is disposed on an inner surface 40b (second surface), which is a surface of the carcass at the tire inner side.

As shown in Fig. 5, the tire outer side denotes an outer side in the tire width direction or an outer side in the tire radial direction with respect to the position of the surface cord 80 in the section of the carcass 40 along the tire width direction and the tire radial direction (however, the folded part 41 is excluded). The tire inner side denotes an inner side in the tire width direction or an inner side in the tire radial direction with respect to the position of the surface cord 80 in the section of the carcass 40 along the tire width direction and the tire radial direction (however, the folded part 41 is excluded).

As shown in Fig. 5, the outer cord 80a is disposed along the carcass 40 such that the outer cord 80a contacts the outer surface 40a of the carcass 40. Similarly, the inner cord 80b is disposed along the carcass 40 such that the inner cord 80b contacts the inner surface 40b of the carcass 40.

In the present embodiment, each of the outer cord 80a and the inner cord 80b is terminated at the middle of the folded part 41.

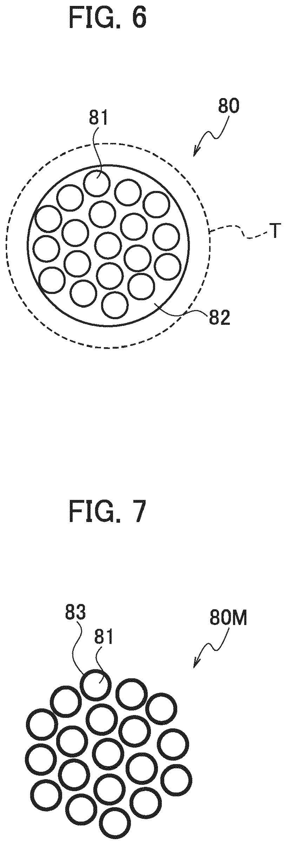

Fig. 6 is a cross-sectional view of the surface cord 80 along the radial direction thereof. Fig. 6 schematically shows a sectional shape of the surface cord 80. As shown in Fig. 6, the surface cord 80 has a twisted yarn structure in which a plurality of organic fiber raw yarns 81 is twisted.

The number of the raw yarns 81 that form the surface cord 80 is not especially limited, however in the present embodiment, since the surface cord 80 also has the function of the bleeder yarn as described above, it is preferably that the number of the raw yarns 81 is set to an extent required for the function of the bleeder yarn (air reservoir prevention).

The tensile strength and the fiber diameter (fineness) of the surface cord 80 may be the same as those of a cord used for the bleeder yarn. Polyester fiber or aramid fiber may be adopted as the surface cord 80.

The outer surface of the surface cord 80 having the twisted yarn structure is coated with a conductive coating 82. Such a surface cord 80 can be manufactured by immersing the surface cord 80 for which a plurality of the raw yarns 81 is twisted, into liquid of the conductive coating. In Fig. 6, the outer surface of each of the raw yarns 81 is coated with the conductive coating 82, however the outer surface of the raw yarn 81 at the center part of the surface cord 80 is not necessarily coated with the conductive coating 82.

A coating thickness T of the conductive coating 82 can be controlled in accordance with the immersing time into the liquid of the conductive coating 82, and the conductivity (electric resistance) of the surface cord 80 can be also controlled.

An aqueous solution in which the carbon black is dissolved (it may be also called a conductive cement) may be adopted as the conductive coating 82. Example of the aqueous solution includes Electrodag 112, which is a commercially available product, produced by Acheson Colloids Company. Electrodag 112 has the electric resistance of 50 Ω/sq. or less at a thickness of 25 µm.

### (4) Modified example

Fig. 7 is a cross-sectional view of a surface cord 80M along the radial direction thereof according to a modified example. The surface cord 80M can be used as a substitute for the surface cord 80.

As shown in Fig. 7, similar to the surface cord 80, the surface cord 80M also has a twisted yarn structure in which a plurality of the organic raw yarns 81 is twisted. The conductive coating is applied to the raw yarn 81, which forms the surface cord 80M, before the raw yarn 81 is twisted. In actual, the raw yarn 81 before twisted is immersed into the liquid of the conductive coating.

As a result, in the surface cord 80M, only the outer surface of each of the raw yarns 81 is coated with a conductive coating 83, and therefore the surface cord 80M does not have the coating thickness T of the conductive coating 82, different from the surface cord 80. The surface cord 80 is more preferable than the surface cord 80M from a viewpoint of simplifying the manufacturing process, however the surface cord 80M can suppress the consumption of the conductive coating and reduce the weight thereof while securing the conductivity, compared to the surface cord 80.

### (5) Functions and effects

According to the embodiment described above, the following functions and effects can be obtained. Specifically, in the pneumatic tire 10, the surface cords 80 (outer cord 80a and inner cord 80b) having conductivity are disposed on the outer surface 40a and the inner surface 40b of the carcass 40. The surface cord 80 is disposed along the tire width direction from a region adjoining the bead 60 to the tread 20. A plurality of the surface cords 80 is disposed with a predetermined interval in the tire circumferential direction.

With this, even in a case in which low conductive rubber is used in the tread 20 or the like, the conductivity of the pneumatic tire 10 as a whole can be further enhanced. Consequently, the static electricity charged on the vehicle 100 can be further surely discharged to the ground R, and this configuration can effectively prevent the problem caused by the static electricity charged on the vehicle 100 (noise mixture to a radio, discharge to a passenger when getting on or off, and the like).

Further, the surface cord 80 also has a function of the bleeder yarn. By applying the conductive coating to the surface cord 80 (precisely, by immersing the surface cord 80 into the liquid of the conductive coating), a gap (clearance) between the raw yarns 81 can be secured, and the deterioration of the air absorbing performance of the surface cord 80 can be suppressed.

Further, as described above, the surface cord 80 for which a plurality of the raw yarns 81 is twisted can be manufactured by immersing the surface cord 80 into the liquid of the conductive coating, and therefore the manufacturing process can be simplified compared to the surface cord 80M.

On the other hand, the surface cord 80M can suppress the consumption of the conductive coating and reduce the weight thereof, compared to the surface cord 80.

The surface cord 80 (surface cord 80M) is disposed from one bead 60 to the other bead 60 via the tread 20. With this, the conductive pass to the ground R can be surely formed.

Further, in the present embodiment, each of the tread 20, the belt layer 30 and the carcass 40 is formed of the rubber having the carbon black (conductive material) content of the predetermined value or less. With this, the low RR of the pneumatic tire 10 can be achieved and the conductivity of the pneumatic tire 10 can be enhanced.

### (6) Other embodiments

As described above, the contents of the present invention are described with reference to the examples, however the present invention is not limited to those descriptions. It is obvious for a person skilled in the art to adopt various modifications and improvements, within the scope of the appended claims.

For example, in the embodiment described above, the surface cord 80 (surface cord 80M, hereinafter the same) is disposed from one bead 60 to the other bead 60 via the tread 20, however the surface cord 80 may be disposed along the tire width direction from the region adjoining the bead 60 to the tread 20. That is, the surface cord 80 may be disposed from either one bead 60 to the tread 20.

Further, the surface cord 80 may be disposed on only one of the outer surface 40a and the inner surface 40b of the carcass 40. In this case, it is preferable that the surface cord 80 (outer cord 80a) is disposed on the outer surface 40a, from a viewpoint of easily forming the conductive pass. Further, the outer cord 80a and the inner cord 80b may be connected to each other at any position, from a viewpoint of forming the conductive pass.

As described above, the embodiments of the present invention are described, however the present invention is not limited to the description and the drawings but only to the scope of the appended claims.

### [Reference Signs List]

10: pneumatic tire
20: tread
21: tread under cushion rubber
25: antenna
30: belt layer
40: carcass
40a: outer surface
40b: inner surface
41: folded part
50: inner liner
60: bead
61: bead core
62: stiffener
70: chafer
80, 80M: surface cord
80a: outer cord
80b: inner cord
81: raw yarn
82, 83: conductive coating
100: vehicle
110: vehicle body
120: suspension
130: rim wheel

## Claims

1. A tire (10) comprising:
a tread (20) that contacts a road surface (R);
a pair of beads (60) to be locked to a rim wheel (130);
a carcass (40) folded from an inner side in a tire width direction to an outer side in the tire width direction at a position of the bead (60); and
a surface cord (80) disposed on at least one of a first surface (40a), which is a surface of the carcass (40) at a tire outer side, and a second surface (40b), which is a surface of the carcass (40) of a tire inner side,
wherein the surface cord (80) has conductivity and is disposed along the tire width direction from at least a region adjoining the bead (60) to the tread (20), and
wherein a plurality of the surface cords (80) is disposed with a predetermined interval in a tire circumferential direction,
**characterized in that** the surface cord (80) has a twisted yarn structure in which a plurality of organic fiber raw yarns (81) is twisted, and
wherein an outer surface of the twisted yarn structure is coated with a conductive coating (82).

2. A tire (10) comprising:
a tread (20) that contacts a road surface (R);
a pair of beads (60) to be locked to a rim wheel (130);
a carcass (40) folded from an inner side in a tire width direction to an outer side in the tire width direction at a position of the bead (60); and
a surface cord (80, 80M) disposed on at least one of a first surface (40a), which is a surface of the carcass (40) at a tire outer side, and a second surface (40b), which is a surface of the carcass (40) of a tire inner side,
wherein the surface cord (80, 80M) has conductivity and is disposed along the tire width direction from at least a region adjoining the bead (60) to the tread (20), and
wherein a plurality of the surface cords (80, 80M) is disposed with a predetermined interval in a tire circumferential direction,
**characterized in that** the surface cord (80, 80M) has a twisted yarn structure in which a plurality of organic fiber raw yarns (81) is twisted, and
wherein an outer surface of each of the raw yarns (81) is coated with a conductive coating (82, 83).

3. The tire (10) according to claim 1 or 2, wherein the surface cord (80, 80M) is disposed from one bead (60) to the other bead (60) via the tread (20).

## Patentansprüche

1. Reifen (10), der Folgendes umfasst:
eine Lauffläche (20), die eine Straßenoberfläche (R) berührt;
ein Paar von Wülsten (60), die an einem Felgenrad (130) einzurasten sind;
eine Karkasse (40), die an einer Position der Wulst (60) von einer in einer Reifenbreitenrichtung inneren Seite hin zu einer in der Reifenbreitenrichtung äußeren Seite gefaltet ist; und
einen Oberflächenkord (80), der auf mindestens einer von einer ersten Oberfläche (40a), die eine Oberfläche der Karkasse (40) an einer Reifenaußenseite ist, und einer zweiten Oberfläche (40b), die eine Oberfläche der Karkasse (40) einer Reifeninnenseite ist, angeordnet ist,
wobei der Oberflächenkord (80) eine Leitfähigkeit aufweist und entlang der Reifenbreitenrichtung von mindestens einem Bereich, der sich an die Wulst (60) anschließt, bis zu der Lauffläche (20) angeordnet ist, und
wobei eine Vielzahl der Oberflächenkords (80) mit einem vorbestimmten Abstand in einer Reifenumfangsrichtung angeordnet ist,
**dadurch gekennzeichnet, dass** der Oberflächenkord (80) eine verdrillte Garnstruktur aufweist, bei der eine Vielzahl von Rohgarnen (81) aus organischen Fasern verdrillt ist, und
wobei eine Außenfläche der verdrillten Garnstruktur mit einem leitfähigen Überzug (82) überzogen ist.

2. Reifen (10), der Folgendes umfasst:
eine Lauffläche (20), die eine Straßenoberfläche (R) berührt;
ein Paar von Wülsten (60), die an einem Felgenrad (130) einzurasten sind;
eine Karkasse (40), die an einer Position der Wulst (60) von einer in einer Reifenbreitenrichtung inneren Seite hin zu einer in der Reifenbreitenrichtung äußeren Seite gefaltet ist; und
einen Oberflächenkord (80, 80M), der auf mindestens einer von einer ersten Oberfläche (40a), die eine Oberfläche der Karkasse (40) an einer Reifenaußenseite ist, und einer zweiten Oberfläche (40b), die eine Oberfläche der Karkasse (40) einer Reifeninnenseite ist, angeordnet ist,
wobei der Oberflächenkord (80, 80M) eine Leitfähigkeit aufweist und entlang der Reifenbreitenrichtung von mindestens einem Bereich, der sich an die Wulst (60) anschließt, bis zu der Lauffläche (20) angeordnet ist, und
wobei eine Vielzahl der Oberflächenkords (80, 80M) mit einem vorbestimmten Abstand in einer Reifenumfangsrichtung angeordnet ist,
**dadurch gekennzeichnet, dass** der Oberflächenkord (80, 80M) eine verdrillte Garnstruktur aufweist, bei der eine Vielzahl von Rohgarnen (81) aus organischen Fasern verdrillt ist, und
wobei eine Außenfläche jedes der Rohgarne (81) mit einem leitfähigen Überzug (82, 83) überzogen ist.

3. Reifen (10) nach Anspruch 1 oder 2, wobei der Oberflächenkord (80, 80M) über die Lauffläche (20) von einer Wulst (60) zu der anderen Wulst (60) angeordnet ist.

## Revendications

1. Pneumatique (10), comprenant :
une bande de roulement (20) qui contacte la surface d'une route (R) ;
une paire de talons (60) destinés à être verrouillés sur une roue à jante (130) ;
une carcasse (40) pliée d'un côté interne, dans une direction de la largeur du pneumatique, vers un côté externe, dans la direction de la largeur du pneumatique, au niveau d'une position du talon (60) ; et
un câblé de surface (80) disposé sur au moins une d'une première surface (40a), qui est une surface de la carcasse (40), au niveau d'un côté externe du pneumatique, et une deuxième surface (40b), qui est une surface de la carcasse (40) d'un côté interne du pneumatique,
dans lequel le câblé de surface (80) présente une conductivité et est disposé le long de la direction de la largeur du pneumatique, à partir d'au moins une région adjacente au talon (60) vers la bande de roulement (20), et
dans lequel une pluralité des câblés de surface (80) sont disposés à un intervalle prédéterminé dans une direction circonférentielle du pneumatique,
**caractérisé en ce que** le câblé de surface (80) a une structure à fils à torsion dans laquelle une pluralité de fils bruts à fibres organiques (81) sont tordus, et
dans lequel une surface externe de la structure à fils à torsion est revêtue d'un revêtement conducteur (82).

2. Pneumatique (10), comprenant :
une bande de roulement (20) qui contacte la surface d'une route (R) ;
une paire de talons (60) destinés à être verrouillés sur une roue à jante (130) ;
une carcasse (40) pliée d'un côté interne, dans une direction de la largeur du pneumatique, vers un côté externe, dans la direction de la largeur du pneumatique, au niveau d'une position du talon (60) ; et
un câblé de surface (80, 80M) disposé sur au moins une d'une première surface (40a), qui est une surface de la carcasse (40), au niveau d'un côté externe du pneumatique, et une deuxième surface (40b), qui est une surface de la carcasse (40) d'un côté interne du pneumatique,
dans lequel le câblé de surface (80, 80M) présente une conductivité et est disposé le long de la direction de la largeur du pneumatique, à partir d'au moins une région adjacente au talon (60) vers la bande de roulement (20), et
dans lequel une pluralité des câblés de surface (80, 80M) sont disposés à un intervalle prédéterminé dans une direction circonférentielle du pneumatique,
**caractérisé en ce que** le câblé de surface (80, 80M) a une structure à fils à torsion dans laquelle une pluralité de fils bruts (81) à fibres organiques sont tordus, et
dans lequel une surface externe de chacun des fils bruts (81) est revêtue d'un revêtement conducteur (82, 83).

3. Pneumatique (10) selon la revendication 1 ou 2, dans lequel le câblé de surface (80, 80M) est disposé d'un talon (60) vers l'autre talon (60) *via* la bande de roulement (20).
